Europäisches Patentamt

European Patent Office

Office européen des brevets

(11) Veröffentlichungsnummer: **0 186 072**
**B1**

(12) **EUROPÄISCHE PATENTSCHRIFT**

(45) Veröffentlichungstag der Patentschrift: **25.07.90**

(51) Int. Cl.⁵: **B 23 D 31/00**, B 23 D 36/00

(21) Anmeldenummer: **85115943.4**

(22) Anmeldetag: **13.12.85**

(54) **Trennmaschine für kreisbogenförmige Profilstücke oder Profilringe.**

(30) Priorität: **22.12.84 DE 3447183**

(43) Veröffentlichungstag der Anmeldung:
**02.07.86 Patentblatt 86/27**

(45) Bekanntmachung des Hinweises auf die
Patenterteilung:
**25.07.90 Patentblatt 90/30**

(84) Benannte Vertragsstaaten:
**AT BE CH DE FR GB IT LI LU NL SE**

(56) Entgegenhaltungen:
**DE-A-2 748 122**
**DE-A-2 838 128**
**DE-A-2 928 497**
**US-A-4 365 492**

(73) Patentinhaber: **Krückels, Gerhard, Dipl.-Ing.**
**Königsberger Strasse 2**
**D-7860 Schopfheim (DE)**

(72) Erfinder: **Krückels, Gerhard, Dipl.-Ing.**
**Königsberger Strasse 2**
**D-7860 Schopfheim (DE)**

(74) Vertreter: **Patentanwälte Dipl.-Ing. Hans Schmitt**
**Dipl.-Ing. Wolfgang Maucher**
**Dreikönigstrasse 13**
**D-7800 Freiburg i.Br. (DE)**

Courier Press, Leamington Spa, England.

**Beschreibung**

Die Erfindung betrifft eine Trennmaschine gemäß den Merkmalen des Oberbegriffes des Patentanspruches 1.

Derartige Trennmaschinen sind bekannt und dienen beispielsweise dazu, Fahrrad-Felgen oder Schutzbleche oder Faßreifen od.dgl. kreisbogenförmige Profilstücke oder Profilringe herzustellen. Wichtig ist dabei vor allem für die Fertigung von Profilringen ein genaues Maß der Profillänge und die Vermeidung von von der Kreisbogenform abweichenden Verformungen.

Bisher ist es aus der Praxis bekannt, daß das in Bogenfork gebrachte und dann abzutrennende Profil gegen einen Anschlag anläuft, mit dessen Hilfe die Trennvorrichtung durch das Profil selbst mitbewegt wird. Dies führt vor jedem Trennvorgang zu einem unerwünschten Schlag, was Deformationen (Knick) des Profilringes verursachen kann. Diese Deformation aufgrund des Anlaufstoßes erfolgt dabei in der Regel an der schwächsten Stelle des zu bearbeitenden Werkstückes, nämlich unmittelbar hinter der Biegeeinrichtung. Damit diese Deformationen ein vorgegebenes Maß nicht überschreiten muß die Vorschubgeschwindigkeit für das Profil geringgehalten werden.

Ein weiterer Nachteil dieser bisher bekannten Lösung besteht darin, daß für jeden gewünschten Biegeradius ein eigener Meßring oder ein in seinem Umfang einstellbarer Meßring erforderlich ist, auf welchem der Anschlag angeordnet ist.

Der Anschlag kann auch als elektrischer Schalter ausgebildet sein, der seinerseits eine entsprechende Vorschubvorrichtung für die Trennvorrichtung in Bewegung setzt. Eine solche Ausbildung verschlechtert jedoch die Genauigkeit der angestrebten Bogenlänge bzw. des Umfanges des herzustellenden Profilstückes oder Profilringes.

Ausgehend von dem vorerwähnten Stand der Technik liegt der Erfindung die Aufgabe zugrunde, eine Trennmaschine gemäß den Merkmalen des Oberbegriffes des Patentanspruches 1 dahingehend zu verbessern, daß sichergestellt wird, daß bei hoher Profilgeschwindigkeit dennoch nur ein geringes Maß an Deformation auftritt. Ein Meßring soll vermieden werden.

Diese Aufgabe wird erfindungsgemäß durch die im Patentanspruch 1 gekennzeichnete Trennmaschine gelöst.

Hierbei findet erstmals ein getrennt ausgebildeter, regelbarer Antrieb Verwendung, der in Abhängigkeit von der Profilgeschwindigkeit und der Profillänge arbeitet. Die dafür erforderlichen Steuerimpulse liefert das Meßrad, welches weitgehend unbeeinflußt von dem Biege- und Schneidvorgang vor der Biegeeinrichtung sitzt. Das Profil kann sogar mit wechselnden Geschwindigkeiten durch die Trennmaschine und an dem Meßrad vorbeilaufen. Ein weiterer Vorteil besteht darin, daß das Einstellen unterschiedlicher Biegeradien erheblich vereinfacht ist. Durch die Abhängigkeit des gesamten Systemes ausschließlich von der durchlaufenden Profillänge und durch seine Unabhängigkeit von der jeweiligen Profilgeschwindigkeit kann eine genau vorgegebene Länge des abzutrennenden bogenförmigen Profilstückes oder des Profilringes mit geringsten Toleranzen erreicht werden. Ein Meßring mit Anschlag ist dabei entbehrlich. Es hat sich gezeigt, daß gegenüber herkömmlichen Methoden die Profilgeschwindigkeit verdoppelt oder sogar noch mehr erhöht werden kann.

Zwar sind Vorrichtungen bekannt, bei denen gerade Profilstücke mittels mitlaufender Trennvorrichtungen nach entsprechender Ansteuerung aufgrund der Profilgeschwindigkeit abgetrennt werden. Es handelt sich dabei aber um Trennmaschinen anderer Gattung, bei denen nicht nur die Biegeeinrichtung, sondern auch eine Schwenkachse für die Trennvorrichtung fehlen.

Zweckmäßig ist es, wenn als Steuerung ein Rechner, insbesondere ein Mikrocomputer vorgesehen ist. Dadurch wird die Bedienung der Trennmaschine insbesondere bezüglich der Wählbarkeit der Abmessung des jeweiligen Profilstückes oder Profilringes vereinfacht, weil der Benutzer an diesem Mikrocomputer lediglich die gewünschten Abmessungen einzugeben hat.

Als Antrieb kann ein Elektromotor, insbesondere ein Drehstrom-Servomotor vorgesehen sein. Dieser läßt sich nämlich besonders gut über einen Drehimpulsgeber steuern und regeln.

Für eine gute Regelbarkeit des Antreibens der Trennvorrichtung und um von einem gut steuerbaren Antrieb relativ hoher Drehzahl auf eine genügend starke Untersetzung für die Verschwenkung der Schwenkachse der Trennvorrichtung zu kommen, ist es vorteilhaft, wenn zwischen dem Antrieb und der Schwenkachse der Trennvorrichtung ein spielfreies Getriebe, vorzugsweise ein Planetengetriebe angeordnet ist. Dies erlaubt die erwähnte hohe Motordrehzahl bei dennoch entsprechend langsamer bewegung der Trennvorrichtung, was zu einer großen Arbeitsgenauigkeit führt.

Vor allem bei Kombination der vorbeschriebenen Merkmale und Maßnahmen ergibt sich eine hohe Anfahrgeschwindigkeit sowie eine hohe Genauigkeit bei der Synchronisierung der mitlaufenden Trenn- oder Stanzvorrichtung mit der Materialgeschwindigkeit, so daß im fliegenden Schnitt ein Abtrennen des jeweiligen Werkstückes auf die vorgegebene Länge mit großer Genauigkeit möglich ist. Dabei kann nämlich ein Mikrocomputer einen Drehstrom-Servomotor auf die entsprechende Materialgeschwindigkeit beschleunigen, wenn die gewünschte Bodenlänge durchlaufen ist und gleichzeitig auch laufend Positionsabweichungen zwischen dem Profil und der tatsächlichen Lage des Trennwerkzeuges erfassen und den Trennvorgang dann auslösen, wenn sowohl der Gleichlauf als auch die vorgegebene Länge erreicht sind. Nach Beendigung des Trennvorganges erfolgt über den gleichen Antrieb durch Umkehr seiner Drehrichtung der Rücklauf der Trennvorrichtung in die Ausgangsstellung. Es hat sich gezeigt, daß die erfindungs-

gemäße Anordnung eine erhebliche Vergröße-rung des Profilvorschubes, also der Materialgeschwindigkeit erlaubt, ohne daß die Nachteile der bisher bekannten derartigen Trennmaschinen für bogenförmige Profilstücke oder Profilringe auftreten. Trotz der hohen Arbeitsgeschwindigkeit gibt es keine Deformierung des Bogens und es wird mit sehr hoher Genauigkeit die vorgegebene Länge erreicht.

Nachstehend ist ein Ausführungsbeispiel der Erfindung anhand der Zeichnung noch näher beschrieben. Es zeigt in schematisierter Darstellung:

Fig. 1 eine Seitenansicht,

Fig. 2 eine Stirnansicht und

Fig. 3 eine Draufsicht einer erfindungsgemäßen Trennmaschine für kreisbogenförmig ausgebildete Profilstücke oder Profilringe.

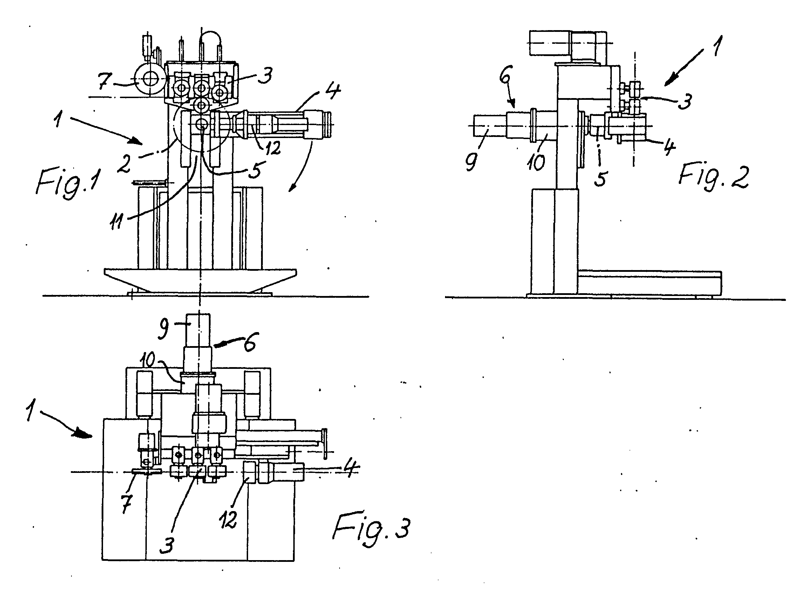

Eine im ganzen mit 1 bezeichnete Trennmaschine für in Fig. 1 strichpunktiert angedeutete kreisbogenförmig ausgebildete Profilstücke oder Profilringe 2 hat eine an sich bekannte Biegeeinrichtung 3 sowie eine schenkbar gelagerte, auf einem Kreisbogen bewegbare Trennvorrichtung 4, mit welche das jeweilige Profilstück oder der Profilring von dem Ausgangsprofil in noch zu beschreibender Weise abgetrennt wird.

Vor allem in den Fig. 2 und 3 erkennt man, daß auf der Schwenkachse 5 der Trennvorrichtung 4 ein regelbarer Antrieb 6 für die Verschwenkung der Trennvorrichtung 4 angeordnet ist. In Fig. 1 erkennt man, daß in Vorschubrichtung des Profiles vor der Biegeeinrichtung 3 ein Meßrad 7 angeordnet ist, welches als Drehimpulsgeber ausgebildet ist und den Antrieb 6 steuert sowie dessen Drehzahl in Abhängigkeit von der Profilgeschwindigkeit selbstättig regelt.

Zwischen dem Drehimpulsgeber 7 und dem Antrieb 6 ist eine nicht näher dargestellt Steue-rung, vorzugsweise ein Mikrocomputer ange-ordnet, mit dem die Abmessung des jeweiligen Profilstückes oder Profilringes 2 wählbar ist.

Als Antrieb 6 ist im Ausführungsbeispiel ein Elektromotor 9, insbesondere ein Drehstrom-Servomotor mit einem spielfreien Getriebe 10, zweckmäßigerweise einem Planetengetriebe für eine starke Untersetzung vorgesehen, dessen Abtrieb die Schwenkachse 5 ist oder mit dieser gekuppelt ist.

In Fig. 1 ist noch angedeutet, daß die Schwenkachse 5 der Trennvorrichtung 4 an einer Verstellspindel 11 zur Einstellung des Biegeradius gelagert ist. Ferner ist die Ausgangslage des Trennwerkzeuges 12, im Ausführungsbeispiel eines Stanzwerkzeuges, an der Trennvorrichtung 4 zur Einstellung auf den jeweiligen Biegeradius in radialer Richtung zu seiner Verschwenkbewegung verstellbar und festlegbar.

Die erfindungsgemäße Trennmaschine 1 mit Biegeeinrichtung 3 kann beispielsweise als selbständige Maschine hinter einer Profiliermaschine aufgestellt sein. Ein gerader Profilstab läuft dann von dieser Profiliermaschine kommend kontinuierlich in die Biegeeinrichtung ein, wo dieses Profil auf den eingestellten Durchmesser gebogen und anschließend mit Hilfe der Trennvorrichtung 4 fliegend beispielsweise als Ring abgetrennt wird. Dabei wird der laufende Profilstab durch das stationär angeordnete Meßrad 7 mit Drehimpulsgeber abgetastet. Dieser Drehimpulsgeber gibt die Impulse an den erwähnten Mikrocomputer weiter. Ist die gewünschte und in diesem Mikrocomputer vorgewählte Ringlänge durchlaufen, steuert der Mikrocomputer den Elektromotor 9 in dem Sinne an, daß dieser Motor anläuft und die Trennvorrichtung 4 auf die Geschwindigkeit des Profiles beschleunigt, Wenn der Gleichlauf zwischen Trennvorrichtung 4 und Profilvorschub und die vorgegebene Länge des Profilstückes oder Profilringes erreicht sind, löst der Mikrocomputer den eigentlichen Trennvorgang aus. Nach Beendigung des Trennvorganges erfolgt der Rücklauf der Trennvorrichtung in die in Fig. 1 dargestellte Ausgangsstellung. Es erfolgt also ein gesteuerter und geregelter Arbeitsablauf hoher Genauigkeit, der eine hohe Arbeitsgeschwindigkeit ermöglicht.

## Patentansprüche

1. Trennmaschine (1) für kreisbogenförmig ausgebildete Profilstücke oder Profilringe (2) mit einer Beigeeinrichtung (3) sowie einer schwenkbar gelagerten, auf einem Bogen während des Trennvorganges mit Profilgeschwindigkeit bewegbaren, in Abhängigkeit von der Profillänge betätigbaren Trennvorrichtung (4) zum Abtrennen der Profilstücke oder Profilringe von einem Ausgangsprofil, dadurch gekennzeichnet, daß auf der Schwenkachse (5) der Trennvorrichtung (4) ein regelbarer Antrieb (6) für deren Verschwenkung angeordnet ist, daß sich in Vorschubrichtung des Profiles vor der Biegeeinrichtung (3) ein Meßrad (7) mit Drehimpulsgeber befindet und daß zwischen dem Drehimpulsgeber und dem Antrieb (6) eine Steuerung vorgesehen ist, mit der die Drehzahl des Antriebes in Abhängigkeit von der Profilgeschwindigkeit und der Profillänge steuerbar ist.

2. Trennmaschine nach Anspruch 1, dadurch gekennzeichnet, daß als Steuerung ein Rechner, insbesondere ein Mikrocomputer vorgesehen ist.

3. Trennmaschine nach Anspruch 1 oder 2, dadurch gekennzeichnet, daß als Antrieb (6) ein Elektromotor (9), insbesondere ein Drehstrom-Servomotor vorgesehen ist.

4. Trennmaschine nach einem der Ansprüche 1 bis 3, dadurch gekennzeichnet, daß zwischen dem Antrieb (6) und der Schwenkachse (5) der Trennvorrichtung (4) ein spielfreies Getriebe, vorzugsweise ein Planetengetriebe (10) angeordnet ist.

## Revendications

1. Appareil de coupe (1) pour des éléments profilés ou des bagues profilées (2) conformé(e)s en arc de cercle, avec un dispositif de cintrage (3), et avec un dispositif de coupe (4) monté pivotant, déplaçable sur un arc à la vitesse du profilé pendant l'opération de coupe, actionnable en fonction de la longueur du profilé, pour séparer les éléments profilés ou les bagues profilées d'un profilé initial, caractérisé en ce qu'un moyen d'entraînement réglable (6) est disposé sur l'axe de pivotement (5) du dispositif de coupe (4) en vue du pivotement de ce dernier, en ce qu'une roue mesureuse (7) munie d'un générateur d'impulsions de rotation setrouve avant le dispositif de cintrage (3) dans le sens d'avancement du profilé, et en ce qu'il est prévu, entre le générateur d'impulsions de rotation et le moyen d'entraînement (6), un moyen de commande qui permet de commander la vitesse de rotation du moyen d'entraînement en fonction de la vitesse du profilé et de la longueur du profilé.

2. Appareil de coupe selon la revendication 1, caractérisé en ce qu'il est prévu comme moyen de commande un calculateur, notamment un micro-ordinateur.

3. Appareil de coupe selon la revendication 1 ou 2, caractérisé en ce qu'il est prévu comme moyen d'entraînement (6) un moteur électrique (9), notamment un servomoteur triphasé.

4. Appareil de coupe selon l'une des revendications 1 à 3, caractérisé en ce qu'un moyen de transmission sans jeu, de préférence un engrenage planétaire (10), est disposé entre le moyen d'entraînement (6) et l'axe de pivotement (5) du dispositif de coupe (4).

## Claims

1. An apparatus (1) for cutting circular arc-shaped profile members or rings (2), including a bending device (3) as well as a swivel-mounted cutting device (4) which is movable on an arc during the cutting operation and at the speed of the profile, is operable in dependence on the length of the profile and serves to sever the profile members or rings from starting stock, characterized in that a controllable drive (6) for the swivel motion of the cutting device (4) is disposed on the swivel shaft (5) of said cutting device, that a measuring wheel (7) with an angular momentum transmitter is situated in front of the bending device (3) in the direction of feed of the profile, and that between the angular momentum transmitter and the drive (6) provision is made for a control with which the speed of the drive is controllable in dependence on the speed and length of the profile.

2. The cutting apparatus as claimed in claim 1, characterized in that a computer, particularly a microcomputer, is provided as the control.

3. The cutting apparatus as claimed in claim 1 or claim 2, characterized in that an electromotor (9), particularly a three-phase servomotor, is provided as the drive (6).

4. The cutting apparatus as claimed in any one of claims 1 to 3, characterized in that a gearing free from backlash, preferably a planetary gearing (10), is disposed between the drive (6) and the swivel shaft (5) of the cutting device (4).

Fig.1

Fig.2

Fig.3

1